(19) Europäisches Patentamt
European Patent Office
Office européen des brevets

(11) **EP 3 400 330 B1**

(12) **EUROPEAN PATENT SPECIFICATION**

(45) Date of publication and mention
of the grant of the patent:
**17.11.2021 Bulletin 2021/46**

(51) Int Cl.:
*D04H 3/007* (2012.01)          *D04H 3/14* (2012.01)
*C08L 23/12* (2006.01)          *C08F 110/06* (2006.01)

(21) Application number: **17700032.0**

(22) Date of filing: **02.01.2017**

(86) International application number:
**PCT/EP2017/050002**

(87) International publication number:
**WO 2017/118612 (13.07.2017 Gazette 2017/28)**

(54) **SPUNBONDED NONWOVEN FABRICS MADE OF PHTHALATE-FREE PP HOMOPOLYMERS**

SPINNVLIESSTOFFE AUS PHTHALATFREIEN PP-HOMOPOLYMEREN

TISSUS NON TISSÉS FILÉS-LIÉS CONSTITUÉS D'HOMOPOLYMÈRES DE POLYPROPYLÈNE (PP) EXEMPTS DE PHTHALATES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.01.2016 EP 16150008**
**27.07.2016 EP 16181420**

(43) Date of publication of application:
**14.11.2018 Bulletin 2018/46**

(73) Proprietor: **Borealis AG**
**1220 Vienna (AT)**

(72) Inventors:
• **WANG, Jingbo**
**4209 Engerwitzdorf (AT)**
• **KLIMKE, Katja**
**4021 Linz (AT)**
• **FIEBIG, Joachim**
**4209 Engerwitzdorf (AT)**
• **VAN PARIDON, Henk**
**3271 Averbode (BE)**
• **GAHLEITNER, Markus**
**4501 Neuhofen/Krems (AT)**

(74) Representative: **Maiwald Patent- und Rechtsanwaltsgesellschaft mbH**
**Elisenhof**
**Elisenstraße 3**
**80335 München (DE)**

(56) References cited:
EP-A1- 1 964 948          EP-A1- 2 682 505
WO-A1-2004/029342          US-A- 5 529 845
US-A1- 2011 086 568

**Description**

The present invention is directed to spunbonded nonwoven fabrics being composed of phthalate-free PP homopolymers and to articles comprising said spunbonded fabrics.

Today, polypropylene fibers or polypropylene nonwoven fabrics have been used in a variety of applications, including filtration medium (filter), diapers, sanitary products, sanitary napkin, panty liner, incontinence product for adults, protective clothing materials, bandages, surgical drape, surgical gown, surgical wear and packing materials.

In general, for production of a spunbonded nonwoven fabric, important points are flowability of the raw material during a spinning process, drawability of the formed filaments without breakage, fibre bonding quality in the fabric as well as the overall stability of the spinning process.

A further important point is that polymers used in the production of spunbonded nonwoven fabrics and laminates thereof should exhibit good tensile properties over a broad range of processing conditions, since such spunbonded nonwoven fabrics are i.a. characterized by tensile strength and elongation-to-break.

Currently it is believed that under the processing conditions used in the production of a spunbonded nonwoven, the narrowing of the molecular weight distribution leads to a lower melt elasticity, which in turn results in a reduction of die swell and in lower resistance to fiber drawing. Thus, the stability of the spinning process as well as the maximum spinning speeds are increased. Additionally, a polypropylene of narrower molecular weight distribution will be better able to retain orientation and give better mechanical properties of the nonwoven.

Various developments have been carried out on raw materials in view of this.

For example EP 2479331 discloses spunbonded nonwoven fabrics obtainable from a crystalline resin composition being a blend of a high crystalline polypropylene, which is generally used for melt spinning, and a specific low crystalline polypropylene which is added in order to adjust the MFR of the mixture to a specific value. This low crystalline polypropylene has a molecular weight distribution of below 4.

EP 2682505 describes in the Examples further polypropylene polymers for the use in spunbonded nonwoven fabrics, which have also a molecular weight distribution of at most 4.

According to EP 2631269 a polypropylene composition is disclosed which must comprise a polypropylene with a melt flow rate MFR2 (230°C) in the range of 0.1 g/10min to 20 g/10min and additionally a small amount of a further polypropylene having a rather high melt flow rate MFR2 (230°C), i.e. in the range of 200 g/10min to 2500 g/10min. Furthermore, the polypropylene composition must have a melt flow rate (230°C) in the range of 10 g/10min to 60 g/10min and a polydispersity index (PI) of not more than 4.0.

Despite the progress in mechanical properties over the recent years, there remains a constant demand for further improvement so as to allow for further increases in processability and spinning process stability and to yield spunbonded nonwoven fabrics with improved tensile strength and elongation at break.

In view of the foregoing, an object of the present invention is to provide a polypropylene based spunbonded nonwoven fabric having a superior combination of mechanical and physical properties together with good processability.

The present inventors have conducted extensive studies, and as a result have found that the aforementioned properties can be achieved by employing a specific polypropylene.

Accordingly, the present invention provides:

A spunbonded nonwoven fabric comprising a polypropylene homopolymer having

a) 0.0 to below 0.8 wt% of a $C_2$ or $C_4$ to $C_{10}$ alpha olefin comonomer
b) a melt flow rate (MFR, 230°C, 2.16 kg, ISO 1133) of 15 to 120 g/10 min and
c) a molecular weight distribution (Mw/Mn) > 4.3 (measured by size exclusion chromatography according to ISO 16014)
d) a melting temperature (DSC, ISO 11357-1 & -2) in the range of 155°C to 162°C and
e) is free of phthalic acid esters as well as their respective decomposition products and wherein the polypropylene homopolymer has been visbroken whereby the ratio of the MFR after visbreaking [MFR final] to the MFR before visbreaking [MFR start]
[MFR final]/ [MFR start] is > 5,
whereby the polypropylene homopolymer has been polymerized in the presence of a) a Ziegler-Natta catalyst (ZN-C) comprising compounds (TC) of a transition metal of Group 4 to 6 of IUPAC, a Group 2 metal compound (MC) and an internal donor (ID), wherein said internal donor (ID) is a non-phthalic compound and is a citraconate; b) optionally a co-catalyst (Co), and c) optionally an external donor (ED).

Said spunbonded nonwoven fabric is preferably characterized by an advantageous relation between tensile strength (TS) and elongation at break (EB) like
EB(CD) > 64 + 1.1*TS(CD) 0.011*TS(CD)$^2$

Both parameters being determined in cross direction (CD), i.e. perpendicular to processing direction on spunbonded nonwoven fabrics having a specific area weight of 5 to 50 g/m$^2$ in accordance with EN 29073-3 (1989).

This specific polypropylene is produced with a so-called 5th generation Ziegler-Natta catalyst, which is based on a non-phthalate internal donor being a citraconate.

Such spunbonded nonwoven fabrics based on this specific polypropylene being free of phthalic acid esters as well as their respective decomposition products and having the above described properties show higher elongation at break and higher tensile strength compared to fabrics based on polypropylene being produced with 4th generation Ziegler-Natta catalysts which use an phthalate based internal donor.

Furthermore, it was surprisingly found that although the polypropylene used according to the invention has a molecular weight distribution above 4, the spinning stability during preparing the fabrics is not negatively influenced and fabrics with different weights can be produced at high speed.

**Detailed description**

According to the present invention the spunbonded nonwoven fabric is based on a specific polypropylene.

The specific polypropylene has to have the following properties:

*a) The polypropylene is a homopolymer*

According to the present invention the expression "propylene homopolymer" relates to a polypropylene that consists substantially, i.e. of above 99.2 wt%, more preferably of at least 99.3 wt%, still more preferably of at least 99.4 wt%, like of at least 99.5 wt% or 99.9 wt%, of propylene units. Thus the polypropylene homopolymer can contain below 0.8 wt% of a $C_2$ or $C_4$ to $C_{10}$ alpha olefin comonomer, preferably a maximum of 0.7 wt%, still more preferably of a maximum of 0.6 wt%, like of a maximum of 0.5 wt% or 0.1 wt% of a $C_2$ or $C_4$ to $C_{10}$ alpha olefin comonomer.

Such comonomers can be selected for example from ethylene, 1-butene, 1-hexene and 1-octene. Preferably the comonomer if present is ethylene.

In another embodiment only propylene units are detectable, i.e. only propylene has been polymerized. In this case the amount of comonomer is 0.0 wt%.

b) The melt flow rate ($MFR_2$, 230°C, 2.16 kg, ISO 1133) is in the range of 15 to 120 g/10 min. Preferably the polypropylene homopolymer has an $MFR_2$ in the range of 15 to 60 g/10 min and more preferably in the range of 15 to 40 g/10 min.

c) The molecular weight distribution (Mw/Mn) of the polypropylene homopolymer is > 4.3 (measured by size exclusion chromatography according to ISO 16014), preferably above 4.5.

d) The propylene homopolymer is preferably a crystalline propylene homopolymer. The term "crystalline" indicates that the propylene homopolymer has a rather high melting temperature. Accordingly throughout the invention the propylene homopolymer is regarded as crystalline unless otherwise indicated. Therefore, the propylene homopolymer has a melting temperature Tm measured by differential scanning calorimetry (DSC, ISO 11357-1 & -2) in the range of 155°C to 162°C.

e) Furthermore the polypropylene homopolymer is free of phthalic acid esters as well as their respective decomposition products.

*Further properties of the polypropylene homopolymer:*

It is preferred that the propylene homopolymer is featured by rather high cold xylene soluble (XCS) content, i.e. by a xylene cold soluble (XCS) of at least 2.5 wt%, like at least 3.0 wt% or at least 3.5 wt%.

Accordingly, the propylene homopolymer has preferably a xylene cold soluble content (XCS) in the range of 2.5 to 5.5 wt%, more preferably in the range of 3.0 to 5.0 wt% and even more preferred in the range of 3.5 to 5.0 wt%.

The amount of xylene cold solubles (XCS) additionally indicates that the propylene homopolymer is preferably free of any elastomeric polymer component, like an ethylene propylene rubber. In other words, the propylene homopolymer shall be not a heterophasic polypropylene, i.e. a system consisting of a polypropylene matrix in which an elastomeric phase is dispersed. Such systems are featured by a rather high xylene cold soluble content.

Further it is preferred that the propylene homopolymer has a crystallization temperature Tc measured by differential scanning calorimetry (DSC, ISO 11357-1 & -2) of equal or more than 105°C, more preferably in the range of 108°C to 130°C, more preferably in the range of 110°C to 125°C.

The polypropylene homopolymer suitable for the present invention is in addition visbroken.

Thus the melt flow rate (230°C/2.16 kg, ISO 1133) of the polypropylene homopolymer before visbreaking is much lower, like from 0.5 to 50 g/10 min. For example, the melt flow rate (230°C/2.16 kg) of the polypropylene homopolymer before visbreaking is from 1.0 to 45 g/10min, like from 1.5 to 40 g/10min.

The ratio of the MFR after visbreaking [MFR final] to the MFR before visbreaking [MFR start] [MFR final]/ [MFR start] is > 5.

Preferably the polypropylene polymer has been visbroken with a visbreaking ratio [final MFR2 (230°C/2.16 kg) / start MFR2 (230°C/2.16 kg)] of greater than 5 to 50.

The "final $MFR_2$ (230°C/2.16 kg)" is the $MFR_2$ (230°C/2.16 kg) of the polypropylene homopolymer after visbreaking and the "start $MFR_2$ (230°C/2.16 kg)" is the $MFR_2$ (230°C/2.16 kg) of the polypropylene homopolymer before visbreaking.

More preferably, the polypropylene homopolymer has been visbroken with a visbreaking ratio [final $MFR_2$ (230°C/2.16 kg) / start $MFR_2$ (230°C/2.16 kg)] of 8 to 25. Even more preferably, the polypropylene homopolymer has been visbroken with a visbreaking ratio [final $MFR_2$ (230°C/2.16 kg) / start $MFR_2$ (230°C/2.16 kg)] of 10 to 20.

As mentioned above, it is an essential feature that the polypropylene homopolymer has been visbroken. Preferred mixing devices suited for visbreaking are known to an art skilled person and can be selected i.a. from discontinuous and continuous kneaders, twin screw extruders and single screw extruders with special mixing sections and co-kneaders and the like.

The visbreaking step according to the present invention is performed either with a peroxide or mixture of peroxides or with a hydroxylamine ester or a mercaptane compound as source of free radicals (visbreaking agent) or by purely thermal degradation.

Typical peroxides being suitable as visbreaking agents are 2,5-dimethyl-2,5-bis(tert.butylperoxy)hexane (DHBP) (for instance sold under the tradenames Luperox 101 and Trigonox 101), 2,5-dimethyl-2,5-bis(tert.butyl-peroxy)hexyne-3 (DYBP) (for instance sold under the tradenames Luperox 130 and Trigonox 145), dicumyl-peroxide (DCUP) (for instance sold under the tradenames Luperox DC and Perkadox BC), di-tert.butyl-peroxide (DTBP) (for instance sold under the tradenames Trigonox B and Luperox Di), tert.butylcumyl-peroxide (BCUP) (for instance sold under the tradenames Trigonox T and Luperox 801) and bis(tert.butylperoxy-isopropyl)benzene (DIPP) (for instance sold under the tradenames Perkadox 14S and Luperox DC).

Suitable amounts of peroxide to be employed in accordance with the present invention are in principle known to the skilled person and can easily be calculated on the basis of the amount of propylene homopolymer to be subjected to visbreaking, the $MFR_2$ (230°C) value of the propylene homopolymer to be subjected to visbreaking and the desired target $MFR_2$ (230°C) of the product to be obtained.

Accordingly, typical amounts of peroxide visbreaking agent are from 0.005 to 0.5 wt%, more preferably from 0.01 to 0.2 wt%, based on the total amount of polypropylene homopolymer employed. Typically, visbreaking in accordance with the present invention is carried out in an extruder, so that under the suitable conditions, an increase of melt flow rate is obtained. During visbreaking, higher molar mass chains of the starting product are broken statistically more frequently than lower molar mass molecules, resulting as indicated above in an overall decrease of the average molecular weight and an increase in melt flow rate.

After visbreaking the polypropylene homopolymer according to this invention is preferably in the form of pellets or granules. The instant polypropylene homopolymer is preferably used in pellet or granule form for the spunbonded fiber process.

The polypropylene homopolymer according to this invention is produced in the presence of

(a) a Ziegler-Natta catalyst comprising compounds of a transition metal of Group 4 to 6 of IUPAC, a Group 2 metal compound and an internal donor,
wherein said internal donor is a non-phthalic compound and is a citraconate,
(b) optionally a co-catalyst, and
(c) optionally an external donor.

Using a Ziegler-Natta catalyst with a non-phthalic compound which is a citraconate as internal donor enables the production of polypropylene homopolymers fulfilling requirement e).

The molar-ratio of co-catalyst to external donor (ED) [Co/ED] is preferably 5 to 45.

Preferably, the polypropylene homopolymer is prepared by a polymerization process as further described below comprising at least one reactor and optionally a second reactor, wherein in the first reactor a first polypropylene homopolymer fraction is produced, which is optionally subsequently transferred into the optional second reactor, whereby in the second reactor the optional second polypropylene homopolymer fraction is produced in the presence of the first polypropylene homopolymer fraction.

The process for the preparation of the polypropylene homopolymer as well as the Ziegler-Natta catalyst used in said process are further described in detail below.

In view of the above, it is mandatory that the polypropylene polymer is free of phthalic compounds as well as their respective decomposition products, i.e. phthalic acid esters, typically used as internal donor of Ziegler-Natta catalysts (e.g. 4th generation Ziegler-Natta catalysts).

The term "free of" phthalic compounds in the meaning of the present invention refers to a polypropylene homopolymer in which no phthalic compounds as well as no respective decomposition products at all originating from the used catalyst, are detectable.

According to the present invention the term "phthalic compounds" refers to phthalic acid (CAS No. 88-99-3), its mono- and diesters with aliphatic, alicyclic and aromatic alcohols as well as phthalic anhydride.

As already indicated above, the polypropylene polymer is optionally produced in a sequential polymerization process.

The term "sequential polymerization system" indicates that the polypropylene polymer is produced in at least two reactors connected in series. Accordingly, the polymerization system for sequential polymerization comprises at least a first polymerization reactor and a second polymerization reactor, and optionally a third polymerization reactor. The term "polymerization reactor" shall indicate that the main polymerization takes place. Thus, in case the process consists of two polymerization reactors, this definition does not exclude the option that the overall system comprises for instance a pre-polymerization step in a prepolymerization reactor. The term "consist of" is only a closing formulation in view of the main polymerization reactors.

Preferably the first polymerization reactor is, in any case, a slurry reactor and can be any continuous or simple stirred batch tank reactor or loop reactor operating in bulk or slurry. Bulk means a polymerization in a reaction medium that comprises of at least 60 % (w/w) monomer. According to the present invention the slurry reactor is preferably a (bulk) loop reactor.

The optional second polymerization reactor can be either a slurry reactor, as defined above, preferably a loop reactor or a gas phase reactor.

The optional third polymerization reactor is preferably a gas phase reactor.

Suitable sequential polymerization processes are known in the state of the art.

A preferred multistage process is a "loop-gas phase"-process, such as developed by Borealis (known as BORSTAR® technology) described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of Basell.

It is within the skill of art skilled persons to choose the polymerization conditions in a way to yield the desired properties of the polypropylene polymer.

*The Ziegler-Natta Catalyst, the external donor and the co-catalyst*

As pointed out above in the specific process for the preparation of the polypropylene polymer as defined above a Ziegler-Natta catalyst must be used. Accordingly the Ziegler-Natta catalyst will be now described in more detail.

The catalyst used in the present invention is a solid Ziegler-Natta catalyst, which comprises compounds of a transition metal of Group 4 to 6 of IUPAC, like titanium, a Group 2 metal compound, like a magnesium, and an internal donor being a non-phthalic compound which is a citraconate. Thus, the catalyst is preferably fully free of undesired phthalic compounds. Further, the solid catalyst is free of any external support material, like silica or $MgCl_2$, but the catalyst is self-supported.

The Ziegler-Natta catalyst can be further defined by the way as obtained. Accordingly, the Ziegler-Natta catalyst is preferably obtained by a process comprising the steps of

a)

$a_1$) providing a solution of at least a Group 2 metal alkoxy compound (Ax) being the reaction product of a Group 2 metal compound (MC) and a monohydric alcohol (A) comprising in addition to the hydroxyl moiety at least one ether moiety optionally in an organic liquid reaction medium; or

$a_2$) a solution of at least a Group 2 metal alkoxy compound (Ax') being the reaction product of a Group 2 metal compound (MC) and an alcohol mixture of the monohydric alcohol (A) and a monohydric alcohol (B) of formula ROH, optionally in an organic liquid reaction medium; or

$a_3$) providing a solution of a mixture of the Group 2 alkoxy compound (Ax) and a Group 2 metal alkoxy compound (Bx) being the reaction product of a Group 2 metal compound (MC) and the monohydric alcohol (B), optionally in an organic liquid reaction medium; or

$a_4$) providing a solution of Group 2 alkoxide of formula $M(OR_1)_n(OR_2)_m X_{2-n-m}$ or mixture of Group 2 alkoxides $M(OR_i)_{n'}X_{2-n'}$ and $M(OR_2)_{m'}X_{2-m'}$, where M is Group 2 metal, X is halogen, $R_1$ and $R_2$ are different alkyl groups of $C_2$ to $C_{16}$ carbon atoms, and $0 \leq n < 2$, $0 \leq m < 2$ and $n+m+(2-n-m) = 2$, provided that both n and $m \neq 0$, $0 <$

n' $\leq$ 2 and 0 < m' $\leq$ 2; and

b) adding said solution from step a) to at least one compound of a transition metal of Group 4 to 6 and
c) obtaining the solid catalyst component particles,

and adding the internal electron donor at any step prior to step c).

The internal donor or precursor thereof is added preferably to the solution of step a).

According to the procedure above the Ziegler-Natta catalyst can be obtained via precipitation method or via emulsion (liquid/liquid two-phase system) - solidification method depending on the physical conditions, especially temperature used in steps b) and c).

In both methods (precipitation or emulsion-solidification) the catalyst chemistry is the same.

In precipitation method combination of the solution of step a) with at least one transition metal compound in step b) is carried out and the whole reaction mixture is kept at least at 50°C, more preferably in the temperature range of 55°C to 110°C, more preferably in the range of 70°C to 100°C, to secure full precipitation of the catalyst component in form of a solid particles (step c).

In emulsion - solidification method in step b) the solution of step a) is typically added to the at least one transition metal compound at a lower temperature, such as from -10 to below 50°C, preferably from -5 to 30°C. During agitation of the emulsion the temperature is typically kept at -10 to below 40°C, preferably from -5 to 30°C. Droplets of the dispersed phase of the emulsion form the active catalyst composition. Solidification (step c) of the droplets is suitably carried out by heating the emulsion to a temperature of 70 to 150°C, preferably to 80 to 110°C.

The catalyst prepared by emulsion - solidification method is preferably used in the present invention.

In a preferred embodiment in step a) the solution of $a_2$) or $a_3$) are used, i.e. a solution of (Ax') or a solution of a mixture of (Ax) and (Bx).

Preferably the Group 2 metal is magnesium.

The magnesium alkoxy compounds (Ax), (Ax') and (Bx) can be prepared *in situ in* the first step of the catalyst preparation process, step a), by reacting the magnesium compound with the alcohol(s) as described above, or said magnesium alkoxy compounds can be separately prepared magnesium alkoxy compounds or they can be even commercially available as ready magnesium alkoxy compounds and used as such in the catalyst preparation process of the invention.

Illustrative examples of alcohols (A) are monoethers of dihydric alcohols (glycol monoethers). Preferred alcohols (A) are $C_2$ to $C_4$ glycol monoethers, wherein the ether moieties comprise from 2 to 18 carbon atoms, preferably from 4 to 12 carbon atoms. Preferred examples are 2-(2-ethylhexyloxy)ethanol, 2-butyloxy ethanol, 2-hexyloxy ethanol and 1,3-propylene-glycol-monobutyl ether, 3-butoxy-2-propanol, with 2-(2-ethylhexyloxy)ethanol and 1,3-propyleneglycol-monobutyl ether, 3-butoxy-2-propanol being particularly preferred.

Illustrative monohydric alcohols (B) are of formula ROH, with R being straight-chain or branched $C_6$-$C_{10}$ alkyl residue. The most preferred monohydric alcohol is 2-ethyl-1-hexanol or octanol.

Preferably a mixture of Mg alkoxy compounds (Ax) and (Bx) or mixture of alcohols (A) and (B), respectively, are used and employed in a mole ratio of Bx:Ax or B:A from 8:1 to 2:1, more preferably 5:1 to 3:1.

Magnesium alkoxy compound may be a reaction product of alcohol(s), as defined above, and a magnesium compound selected from dialkyl magnesiums, alkyl magnesium alkoxides, magnesium dialkoxides, alkoxy magnesium halides and alkyl magnesium halides. Alkyl groups can be a similar or different $C_1$-$C_{20}$ alkyl, preferably $C_2$-$C_{10}$ alkyl. Typical alkyl-alkoxy magnesium compounds, when used, are ethyl magnesium butoxide, butyl magnesium pentoxide, octyl magnesium butoxide and octyl magnesium octoxide. Preferably the dialkyl magnesiums are used. Most preferred dialkyl magnesiums are butyl octyl magnesium or butyl ethyl magnesium.

It is also possible that magnesium compound can react in addition to the alcohol (A) and alcohol (B) also with a polyhydric alcohol (C) of formula R"$(OH)_m$ to obtain said magnesium alkoxide compounds. Preferred polyhydric alcohols, if used, are alcohols, wherein R" is a straight-chain, cyclic or branched $C_2$ to $C_{10}$ hydrocarbon residue, and m is an integer of 2 to 6.

The magnesium alkoxy compounds of step a) are thus selected from the group consisting of magnesium dialkoxides, diaryloxy magnesiums, alkyloxy magnesium halides, aryloxy magnesium halides, alkyl magnesium alkoxides, aryl magnesium alkoxides and alkyl magnesium aryloxides. In addition a mixture of magnesium dihalide and a magnesium dialkoxide can be used.

The solvents to be employed for the preparation of the present catalyst may be selected among aromatic and aliphatic straight chain, branched and cyclic hydrocarbons with 5 to 20 carbon atoms, more preferably 5 to 12 carbon atoms, or mixtures thereof. Suitable solvents include benzene, toluene, cumene, xylol, pentane, hexane, heptane, octane and nonane. Hexanes and pentanes are particular preferred.

Mg compound is typically provided as a 10 to 50 wt% solution in a solvent as indicated above. Typical commercially available Mg compound, especially dialkyl magnesium solutions are 20 - 40 wt% solutions in toluene or heptanes.

The reaction for the preparation of the magnesium alkoxy compound may be carried out at a temperature of 40° to 70°C. Most suitable temperature is selected depending on the Mg compound and alcohol(s) used.

The transition metal compound of Group 4 to 6 is preferably a titanium compound, most preferably a titanium halide, like $TiCl_4$.

The non-phthalic internal donor used in the preparation of the catalyst used in the present invention is a non-phthalic compound and is a citraconate.

In emulsion method, the two phase liquid-liquid system may be formed by simple stirring and optionally adding (further) solvent(s) and additives, such as the turbulence minimizing agent (TMA) and/or the emulsifying agents and/or emulsion stabilizers, like surfactants, which are used in a manner known in the art for facilitating the formation of and/or stabilize the emulsion. Preferably, surfactants are acrylic or methacrylic polymers. Particular preferred are unbranched $C_{12}$ to $C_{20}$ (meth)acrylates such as poly(hexadecyl)-methacrylate and poly(octadecyl)-methacrylate and mixtures thereof. Turbulence minimizing agent (TMA), if used, is preferably selected from $\alpha$-olefin polymers of $\alpha$-olefin monomers with 6 to 20 carbon atoms, like polyoctene, polynonene, polydecene, polyundecene or polydodecene or mixtures thereof. Most preferable it is polydecene.

The solid particulate product obtained by precipitation or emulsion - solidification method may be washed at least once, preferably at least twice, most preferably at least three times with an aromatic and/or aliphatic hydrocarbons, preferably with toluene, heptane or pentane. The catalyst can further be dried, as by evaporation or flushing with nitrogen, or it can be slurried to an oily liquid without any drying step.

The finally obtained Ziegler-Natta catalyst is desirably in the form of particles having generally an average particle size range of 5 to 200 $\mu$m, preferably 10 to 100. Particles are compact with low porosity and have surface area below 20 $g/m^2$, more preferably below 10 $g/m^2$. Typically the amount of Ti is 1 to 6 wt%, Mg 10 to 20 wt% and donor 10 to 40 wt% of the catalyst composition.

Detailed description of preparation of catalysts is disclosed in WO 2012/007430, EP2610271, EP 261027 and EP2610272.

The Ziegler-Natta catalyst is preferably used in association with an alkyl aluminum cocatalyst and optionally external donors.

As further component in the instant polymerization process an external donor is preferably present. Suitable external donors include certain silanes, ethers, esters, amines, ketones, heterocyclic compounds and blends of these. It is especially preferred to use a silane. It is most preferred to use silanes of the general formula

$$R^a_p R^b_q Si(OR^c)_{(4-p-q)}$$

wherein $R^a$, $R^b$ and $R^c$ denote a hydrocarbon radical, in particular an alkyl or cycloalkyl group, and wherein p and q are numbers ranging from 0 to 3 with their sum p + q being equal to or less than 3. $R^a$, $R^b$ and $R^c$ can be chosen independently from one another and can be the same or different. Specific examples of such silanes are (tert-butyl)$_2$Si(OCH$_3$)$_2$, (cyclohexyl)(methyl)Si(OCH$_3$)$^2$, (phenyl)$_2$Si(OCH$_3$)$_2$ and (cyclopentyl)$_2$Si(OCH$_3$)$_2$, or of general formula

$$Si(OCH_2CH_3)_3(NR^3R^4)$$

wherein $R^3$ and $R^4$ can be the same or different a represent a hydrocarbon group having 1 to 12 carbon atoms.

$R^3$ and $R^4$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^3$ and $R^4$ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.

More preferably both $R^1$ and $R^2$ are the same, yet more preferably both $R^3$ and $R^4$ are an ethyl group.

Especially preferred external donors are the dicyclopentyl dimethoxy silane donor (D-donor) or the cyclohexylmethyl dimethoxy silane donor (C-Donor).

In addition to the Ziegler-Natta catalyst and the optional external donor a co-catalyst can be used. The co-catalyst is preferably a compound of group 13 of the periodic table (IUPAC), e.g. organo aluminum, such as an aluminum compound, like aluminum alkyl, aluminum halide or aluminum alkyl halide compound. Accordingly, in one specific embodiment the co-catalyst (Co) is a trialkylaluminium, like triethylaluminium (TEAL), dialkyl aluminium chloride or alkyl aluminium dichloride or mixtures thereof. In one specific embodiment the co-catalyst (Co) is triethylaluminium (TEAL).

Preferably the ratio between the co-catalyst (Co) and the external donor (ED) [Co/ED] and/or the ratio between the co-catalyst (Co) and the transition metal (TM) [Co/TM] should be carefully chosen.

Accordingly,

(a)the mol-ratio of co-catalyst (Co) to external donor (ED) [Co/ED] must be in the range of 5 to 45, preferably is in the range of 5 to 35, more preferably is in the range of 5 to 25; and optionally

(b) the mol-ratio of co-catalyst (Co) to titanium compound (TC) [Co/TC] must be in the range of above 80 to 500, preferably is in the range of 100 to 350, still more preferably is in the range of 120 to 300.

The propylene homopolymer as defined above is suitable for being converted into spunbonded polypropylene fibres without the need of adding any further polymer component.

The polypropylene homopolymer of the present invention may comprise further components. However, it is preferred that the inventive polypropylene homopolymer comprises as polymer components only the polypropylene homopolymer as defined in the instant invention. Accordingly, the amount of polypropylene homopolymer may not result in 100.0 wt%. Thus, the remaining part up to 100.0 wt% may be accomplished by further additives known in the art. However, this remaining part shall be not more than 5.0 wt%, like not more than 3.0 wt% within the total polypropylene homopolymer. For instance, the inventive polypropylene composition may comprise additionally small amounts of additives selected from the group comprising antioxidants, stabilizers, fillers, colorants, nucleating agents and antistatic agents. In general, they are incorporated during granulation of the pulverulent product obtained in the polymerization. Accordingly, the polypropylene homopolymer constitutes at least to 95.0 wt%, more preferably at least 97.0 wt%.

Spunbonded fibres differ essentially from other fibres, in particular from those produced by melt blown processes.

In one preferred embodiment of the present invention, the polypropylene fibres (PP-F) have an average filament fineness of not more than 2.0 denier and more preferably of not more than 1.9 denier.

Additionally or alternatively, the polypropylene fibres have an average filament fineness in the range of 1.0 denier to 2.0 denier and more preferably in the range of 1.2 denier to 1.9 denier.

The polypropylene fibres are suitable for producing spunbonded fabrics in the form of nonwoven fabrics.

The present invention is further directed to articles, like webs, made from said spunbonded fabric. Accordingly, the present invention is directed to articles comprising the spunbonded fabric of the present invention, like filtration medium (filter), diaper, sanitary napkin, panty liner, incontinence product for adults, protective clothing, surgical drape, surgical gown, and surgical wear.

The articles of the present invention may comprise in addition to the spunbonded fabric a melt blown web known in the art.

A particular aspect of the present invention refers to a process for the preparation of a spunbonded fabric, wherein the polypropylene homopolymer as defined above has been spunbonded by using a fiber spinning line at a maximum cabin air pressure of at least 3 000 Pa, preferably of at least 4 000 Pa and more preferably of at least 5 000 Pa. The cabin air pressure can be up to 10 000 Pa, preferably up to 9 000 Pa.

The spun bonding process is one which is well known in the art of fabric production. In general, continuous fibers are extruded, laid on an endless belt, and then bonded to each other, and often times to a second layer such as a melt blown layer, often by a heated calander roll, or addition of a binder, or by a mechanical bonding system (entanglement) using needles or hydro jets.

A typical spunbonded process consists of a continuous filament extrusion, followed by drawing, web formation by the use of some type of ejector, and bonding of the web. First, pellets or granules of the polypropylene homopolymer as defined above are fed into an extruder. In the extruder, the pellets or granules are melted and forced through the system by a heating melting screw. At the end of the screw, a spinning pump meters the molten polymer through a filter to a spinneret where the molten polymer is extruded under pressure through capillaries, at a rate of 0.3 to 1.0 grams per hole per minute. The spinneret contains between 65 and 75 holes per cm, measuring 0.4 mm to 0.7 mm in diameter. The polypropylene homopolymer is melted at about 30°C to 150°C above its melting point to achieve sufficiently low melt viscosity for extrusion. The fibers exiting the spinneret are quenched and drawn into fine fibers measuring at most 20 microns in diameter by cold air jets, reaching filament speeds of at least 2 500 m/min. The solidified fiber is laid randomly on a moving belt to form a random netlike structure known in the art as web. After web formation the web is bonded to achieve its final strength using a heated textile calander known in the art as thermobonding calander. The calander consists of two heated steel rolls; one roll is plain and the other bears a pattern of raised points. The web is conveyed to the calander wherein a fabric is formed by pressing the web between the rolls at a bonding temperature of about 140°C to 160°C. The resulting webs preferably have an area weight of 3 to 100 g/m$^2$, more preferably of 5 to 50 g/m$^2$.

Spunbonded fabrics according to the present invention show excellent tensile properties. More specifically, said spunbonded nonwoven fabrics are preferably characterized by an advantageous relation between tensile strength (TS) and elongation at break (EB) like

$$EB(CD) > 64 + 1.1*TS(CD) - 0.011*TS(CD)^2$$

Both parameters being determined in cross direction (CD), i.e. perpendicular to processing direction on spunbonded webs having an area weight in the range of 5 to 50 g/m$^2$ in accordance with EN 29073-3 (1989).

**Experimental** Part

A)METHODS

MFR2 (230 °C) is measured according to ISO 1133 (230°C, 2.16 kg load). The $MFR_2$ of the polypropylene composition is determined on the granules of the material, while the $MFR_2$ of the melt-blown web is determined on cut pieces of a compression-molded plaque prepared from the web in a heated press at a temperature of not more than 200°C, said pieces having a dimension which is comparable to the granule dimension.

**The xylene soluble fraction at room temperature (xylene cold soluble XCS, wt%):** The amount of the polymer soluble in xylene is determined at 25 °C according to ISO 16152; 5th edition; 2005-07-01.

**DSC analysis, melting temperature ($T_m$), melting enthalpy ($H_m$), crystallization temperature ($T_c$) and crystallization enthalpy ($H_c$):** measured with a TA Instrument Q200 differential scanning calorimetry (DSC) on 5 to 7 mg samples. DSC is run according to ISO 11357-1, -2 and -3 / method C2 in a heat / cool / heat cycle with a scan rate of 10 °C/min in the temperature range of -30 to +225°C. Crystallization temperature ($T_c$) and crystallization enthalpy ($H_e$) are determined from the cooling step, while melting temperature ($T_m$) and melting enthalpy ($H_m$) are determined from the second heating step respectively from the first heating step in case of the webs.

**Number average molecular weight ($M_n$), weight average molecular weight ($M_w$), ($M_w/M_n$=MWD) of propylene homopolymer**

Molecular weight averages Mw, Mn and MWD were determined by Gel Permeation Chromatography (GPC) according to ISO 16014-4:2003 and ASTM D 6474-99. A PolymerChar GPC instrument, equipped with infrared (IR) detector was used with 3 x Olexis and 1 x Olexis Guard columns from Polymer Laboratories and 1,2,4-trichlorobenzene (TCB, stabilized with 250 mg/L 2,6-Di tert butyl-4-methyl-phenol) as solvent at 160 °C and at a constant flow rate of 1 mL/min. 200 μL of sample solution were injected per analysis. The column set was calibrated using universal calibration (according to ISO 16014-2:2003) with at least 15 narrow MWD polystyrene (PS) standards in the range of 0,5 kg/mol to 11 500 kg/mol. Mark Houwink constants for PS, PE and PP used are as described per ASTM D 6474-99. All samples were prepared by dissolving the polymer sample to achieve concentration of ∼1 mg/ml (at 160°C) in stabilized TCB (same as mobile phase) for 2.5 hours for PP at max. 160°C under continuous gently shaking in the autosampler of the GPC instrument. The MWD of the polypropylene composition is determined on the granules of the material, while the MWD of the melt-blown web is determined on a fiber sample from the web, both being dissolved in an analogous way.

Grammage of the web

The unit weight (grammage) of the webs in $g/m^2$ was determined in accordance with ISO 536:1995.

Filament fineness

The filament fineness in denier has been calculated from the average fibre diameter by using the following correlation :

$$\text{Fibre diameter(in cm)} = (4.444 \times 10\text{-}6 \times \text{denier}/0.91 \times \pi)1/2$$

Mechanical properties of the web

The mechanical properties of the webs were determined in accordance with EN 29073-3 (1989) "Test methods for nonwovens - Determination of tensile strength and elongation"

**B) EXAMPLES**

The catalyst used in the polymerization process for the propylene homopolymer of the inventive example (IE-1) and the Comparative Example (CE-1) was prepared as follows:

**Used chemicals:**

20 % solution in toluene of butyl ethyl magnesium (Mg(Bu)(Et), BEM), provided by Chemtura 2-ethylhexanol, provided by Amphochem

3-Butoxy-2-propanol - (DOWANOL™ PnB), provided by Dow

bis(2-ethylhexyl)citraconate, provided by SynphaBase

$TiCl_4$, provided by Millenium Chemicals

Toluene, provided by Aspokem

Viscoplex® 1-254, provided by Evonik

Heptane, provided by Chevron

### Preparation of a *Mg alkoxy compound*

Mg alkoxide solution was prepared by adding, with stirring (70 rpm), into 11 kg of a 20 wt-% solution in toluene of butyl ethyl magnesium (Mg(Bu)(Et)), a mixture of 4.7 kg of 2-ethylhexanol and 1.2 kg of butoxypropanol in a 20 l stainless steel reactor. During the addition the reactor contents were maintained below 45 °C. After addition was completed, mixing (70 rpm) of the reaction mixture was continued at 60 °C for 30 minutes. After cooling to room temperature 2.3 kg g of the donor bis(2-ethylhexyl)citraconate was added to the Mg-alkoxide solution keeping temperature below 25 °C. Mixing was continued for 15 minutes under stirring (70 rpm).

### Preparation of solid catalyst component

20.3 kg of $TiCl_4$ and 1.1 kg of toluene were added into a 20 l stainless steel reactor. Under 350 rpm mixing and keeping the temperature at 0 °C, 14.5 kg of the Mg alkoxy compound prepared in example 1 was added during 1.5 hours. 1.7 l of Viscoplex® 1-254 and 7.5 kg of heptane were added and after 1 hour mixing at 0 °C the temperature of the formed emulsion was raised to 90 °C within 1 hour. After 30 minutes mixing was stopped catalyst droplets were solidified and the formed catalyst particles were allowed to settle. After settling (1 hour), the supernatant liquid was siphoned away. Then the catalyst particles were washed with 45 kg of toluene at 90°C for 20 minutes followed by two heptane washes (30 kg, 15 min). During the first heptane wash the temperature was decreased to 50 °C and during the second wash to room temperature.

The thus obtained catalyst was used along with triethyl-aluminium (TEAL) as co-catalyst and dicyclopentyl dimethoxy silane donor (D-donor) as external donor.

The aluminium to donor ratio, the aluminium to titanium ratio and the polymerization conditions are indicated in table 1.

Polymerization was performed in a Borstar PP-type polypropylene (PP) pilot plant, comprising one loop reactor and one gas phase reactor.

**Table 1:** Preparation of the propylene homopolymer for inventive examples

|  |  | **PP homopolymer** |
|:---:|:---:|:---:|
| TEAL/Ti | [mol/mol] | 100 |
| TEAL/Donor | [w/w] | 15/1 |
| Catalyst feed | [g/h] | 2.1 |
| **Loop** |  |  |
| Res.time | [h] | 0.5 |
| Temperature | [°C] | 75 |
| Pressure | [kPa] | 5114 |
| $MFR_2$ | [g/10min] | 2.9 |
| XCS | [wt%] | 4.2 |
| $H_2$/C3 ratio | [mol/kmol] | 0.5 |
| C2/C3 | [mol/kmol] | 1.4 |
| $C_2$ | [wt%] | 0.4 |
| split | [wt%] | 43 |

(continued)

| Gas Phase | | |
|---|---|---|
| Res.time | [h] | 1.6 |
| Temperature | [°C] | 80 |
| Pressure | [kPa] | 1975 |
| $MFR_2$ | [g/10min] | 3.1 |
| XCS | [wt%] | 4.2 |
| $H_2$/C3 ratio | [mol/kmol] | 9.1 |
| C2/C3 | [mol/kmol] | 0.4 |
| $C_2$ | [wt%] | 0.4 |
| split | [wt%] | 57 |

The propylene homopolymer has been mixed with 400 ppm calcium Stearate (CAS No. 1592-23-0) and 1 000 ppm Irganox 1010 supplied by BASF AG, Germany (Pentaerythrityl-tetrakis(3-(3',5'-di-tert. butyl-4-hydroxyphenyl)-propionate, CAS No. 6683-19-8).

In a second step the propylene homopolymer has been visbroken by using a co-rotating twinscrew extruder at 200-230°C and using an appropriate amount of (tert.butylperoxy)-2,5-dimethylhexane (Trigonox 101, distributed by Akzo Nobel, Netherlands) to achieve the target MFR of -27 g/10 min. Table 2 shows the properties of the visbroken polypropylene homopolymer.

**Table 2: properties of polypropylene homopolymer for inventive examples measured on pellets**

| Property | | |
|---|---|---|
| MFR2 | [g/10min] | 27.4 |
| XCS | [wt%] | 4.5 |
| Tm | [°C] | 158 |
| Tc | [°C] | 111 |
| Mw (pellet) | [g/mol] | 176500 |
| MWD (pellet) | [-] | 4.7 |

For the comparative examples polypropylene homopolymer was produced with in a Spheripol process by using the Ziegler-Natta M1 catalyst, a commercial 4th generation Ziegler-Natta catalyst from Lyondell-Basell containing a phthalate based internal donor. The propylene homopolymer has been mixed with 400 ppm calcium Stearate (CAS No. 1592-23-0) and 1 000 ppm Irganox 1010 supplied by BASF AG, Germany (Pentaerythrityl-tetrakis(3-(3',5'-di-tert. butyl-4-hydroxyphenyl)-propionate, CAS No. 6683-19-8).

In a second step the propylene homopolymer has been visbroken by using a co-rotating twinscrew extruder at 200-230°C and using an appropriate amount of (tert.butylperoxy)-2,5-dimethylhexane (Trigonox 101, CAS No. 78-63-7, distributed by Akzo Nobel, Netherlands) to achieve the target MFR of -27 g/10 min. Table 3 shows the properties of the visbroken polypropylene homopolymer.

**Table 3: properties of polypropylene homopolymer for comparative examples measured on pellets**

| Property | | |
|---|---|---|
| MFR2 | [g/10min] | 27.9 |
| XCS | [wt%] | 3.2 |
| Tm | [°C] | 165 |
| Tc | [°C] | 110 |
| Mw (pellet) | [g/mol] | 160500 |

(continued)

| Property | | |
|---|---|---|
| MWD (pellet) | [-] | 4.3 |

**Preparation of polypropylene fibers and spunbonded fabrics**

The polypropylene homopolymers have been converted into spunbonded fabrics on a Reicofil 4 line using a spinneret having 7377 holes of 0.6 mm exit diameter and 6827 holes per meter. The spinneret had a core/sheath (C1/C2) configuration.

The gap of the pre-diffuser exit has a diameter of 27 mm, while the SAS gap exit has a diameter of 20 mm. The temperature of the outlet roll was set to 100 °C and the die temperature to 250°C. The throughput per hole has been kept constant at 0.59 g/(min*hole), at a throughput per meter of 241 kg /(h*m) and a total throughput of 260 kg/h.

The line speed varied and the fabrics produced had a weight of ~ 10 g/m$^2$ to 40 g/m$^2$.

Table 4 summarizes data regarding process parameters like i.a. line speed, weight, filament fineness, processability and mechanical properties with respect to inventive examples IE1, IE2, IE3, IE4, IE5 and IE6 and CE1 to CE5.

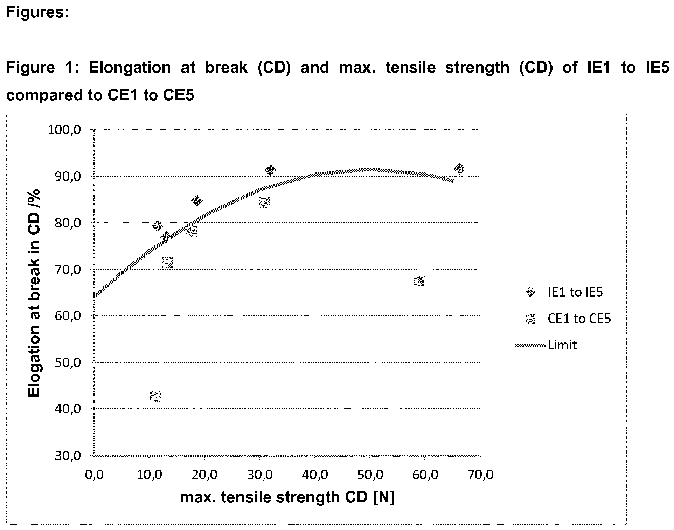

As can be seen from Figure 1 webs of IE1 to IE5 have higher elongation at break and higher tensile strength in CD direction.

**Table 4:**

| Example | throughput ratio C1:C2 | extruder temp. C1/C2 [°C] | melt temperature die C1 [°C] | melt temperature die C2 [°C] | melt pressure die C1 [bar] | melt pressure die C2 [bar] | pressure extruder C1 [bar] | pressure extruder C2 [bar] | cabin pressure [Pa] | filament fineness [dtex] - Filament | filament fineness [den] - Filament | max. tensile strength MD [N] | max. tensile strength CD [N] | elongation MD [%] | elongation CD [%] | fabric weight [g/m²] |
|---|---|---|---|---|---|---|---|---|---|---|---|---|---|---|---|---|
| CE1 | 76:24 | 240 | 243 | 243 | 72 | 58 | 81 | 83 | 5500 | 1,84 | 1,65 | 105,0 | 59,1 | 67,0 | 67,5 | 40,3 |
| CE2 | 76:24 | 240 | 243 | 243 | 72 | 58 | 81 | 83 | 5500 | n.d. | n.d. | 53,4 | 31,0 | 77,8 | 84,3 | 19,9 |
| CE3 | 76:24 | 240 | 243 | 243 | 72 | 58 | 81 | 83 | 5500 | n.d. | n.d. | 34,8 | 17,6 | 73,0 | 78,1 | 13,1 |
| CE4 | 76:24 | 240 | 244 | 244 | 72 | 58 | 81 | 83 | 5500 | n.d. | n.d. | 27,2 | 13,4 | 59,2 | 71,5 | 11,2 |
| CE5 | 76:24 | 240 | 244 | 244 | 72 | 57 | 81 | 83 | 5500 | n.d. | n.d. | 23,3 | 11,1 | 57,7 | 42,6 | 9,7 |
| IE1 | 76:24 | 240 | 243 | 243 | 72 | 58 | 82 | 83 | 5500 | 1,85 | 1,67 | 117,6 | 66,2 | 96,8 | 91,6 | 40,4 |
| IE2 | 76:24 | 240 | 243 | 243 | 72 | 58 | 81 | 83 | 5500 | n.d. | n.d. | 52,0 | 31,9 | 80,1 | 91,4 | 20,1 |
| IE3 | 76:24 | 240 | 243 | 243 | 72 | 58 | 82 | 83 | 5500 | n.d. | n.d. | 32,5 | 18,6 | 71,2 | 84,8 | 13,3 |
| IE4 | 76:24 | 240 | 243 | 243 | 72 | 58 | 82 | 83 | 5500 | n.d. | n.d. | 25,7 | 13,1 | 60,5 | 77,0 | 11,2 |
| IE5 | 76:24 | 240 | 243 | 243 | 72 | 58 | 82 | 83 | 5500 | n.d. | n.d. | 23,5 | 11,5 | 61,6 | 79,5 | 9,8 |
| IE6 | 76:24 | 240 | 243 | 243 | 72 | 57 | 82 | 83 | 8000 | 1,61 | 1,45 | n.d. | n.d. | n.d. | n.d. | n.d. |

n.d. not determined

## Claims

1. Spunbonded nonwoven fabric comprising a polypropylene homopolymer having

   a) 0.0 to below 0.8 wt% of a $C_2$ or $C_4$ to $C_{10}$ alpha olefin comonomer
   b) a melt flow rate (MFR, 230°C, 2.16 kg, ISO 1133) of 15 to 120 g/10 min and
   c) a molecular weight distribution (Mw/Mn) > 4.3 (measured by size exclusion chromatography according to ISO 16014)
   d) a melting temperature (DSC, ISO 11357-1 & -2) in the range of 155°C to 162°C and
   e) is free of phthalic acid esters as well as their respective decomposition products and wherein the polypropylene homopolymer has been visbroken whereby the ratio of the MFR after visbreaking [MFR final] to the MFR before visbreaking [MFR start] [MFR final]/ [MFR start] is > 5,

whereby the polypropylene homopolymer has been polymerized in the presence of a) a Ziegler-Natta catalyst (ZN-C) comprising compounds (TC) of a transition metal of Group 4 to 6 of IUPAC, a Group 2 metal compound (MC) and an internal donor (ID), wherein said internal donor (ID) is a non-phthalic compound and is a citraconate; b) optionally a co-catalyst (Co), and c) optionally an external donor (ED).

2. Spunbonded nonwoven fabric according to claim 1, wherein the fabric is **characterized by** a relation between tensile strength (TS) and elongation at break (EB)
EB(CD) > 64 + 1.1*TS(CD) 0.011*TS(CD)$^2$,
both parameters being determined in cross direction (CD) on spunbonded nonwoven fabrics having a specific area weight of 5 to 50 g/m$^2$ in accordance with EN 29073-3 (1989).

3. Spunbonded nonwoven fabric according to claim 1 or claim 2, wherein the polypropylene homopolymer has a xylene cold soluble content (XCS) in the range of 2.5 to 5.5 wt%.

4. Spunbonded nonwoven fabric according to claim 1 wherein the molar ratio of co-catalyst (Co) to external donor (ED) [Co/ED] is 5 to 45.

5. Spunbonded nonwoven fabric according to claim 1 or 4, wherein the Ziegler-Natta catalyst (ZN-C) is produced by a process comprising the steps of

   a)

      a1) providing a solution of at least a Group 2 metal alkoxy compound (Ax) being the reaction product of a Group 2 metal compound (MC) and a monohydric alcohol (A) comprising in addition to the hydroxyl moiety at least one ether moiety optionally in an organic liquid reaction medium; or
      a2) a solution of at least a Group 2 metal alkoxy compound (Ax') being the reaction product of a Group 2 metal compound (MC) and an alcohol mixture of the monohydric alcohol (A) and a monohydric alcohol (B) of formula ROH, optionally in an organic liquid reaction medium; or
      a3) providing a solution of a mixture of the Group 2 alkoxy compound (Ax) and a Group 2 metal alkoxy compound (Bx) being the reaction product of a Group 2 metal compound (MC) and the monohydric alcohol (B), optionally in an organic liquid reaction medium; or
      a4) providing a solution of Group 2 alkoxide of formula M(OR1)n(OR2)mX2-n-m or mixture of Group 2 alkoxides M(OR1)n'X2-n' and M(OR2)m'X2-m', where M is Group 2 metal, X is halogen, R1 and R2 are different alkyl groups of C2 to C16 carbon atoms, and 0 < n < 2, 0 < m < 2 and n+m+(2-n-m) = 2, provided that both n and m $\neq$ 0, 0 < n' < 2 and 0 < m' < 2; and

      b) adding said solution from step a) to at least one compound (TC) of a transition metal of Group 4 to 6 and
      c) obtaining the solid catalyst component particles,

   and adding the internal donor (ID) at any step prior to step c).

6. Spunbonded nonwoven fabric according to any of the preceding claims, whereby the visbreaking is performed either with a peroxide or mixture of peroxides or with a hydroxylamine ester or a mercaptane compound as source of free radicals (visbreaking agent) or by purely thermal degradation.

7. Spunbonded nonwoven fabric according to claim 6, whereby the visbreaking is performed with a peroxide or mixture of peroxides.

8. Spunbonded nonwoven fabric according to any of the preceding claims, whereby the polypropylene homopolymer comprises additionally amounts of additives selected from the group comprising antioxidants, stabilizers, fillers, colorants, nucleating agents and antistatic agents, the polypropylene homopolymer constituting at least to 95.0 wt%.

9. A method for preparing of a spunbonded fabric according to any of the preceding claims, wherein the polypropylene homopolymer is spunbonded by using a fiber spinning line at a maximum cabin air pressure of at least 3 000 Pa up to 10 000 Pa.

10. Use of spunbonded nonwoven fabric according to any of the preceding claims 1 to 8 for the preparation of articles.

11. Article comprising the spunbonded nonwoven fabric according to any of the preceding claims 1 to 8, wherein said article is selected from filtration medium (filter), diaper, sanitary napkin, panty liner, incontinence product for adults, protective clothing, surgical drape, surgical gown, and surgical wear.

12. Articles according to claim 11, wherein the articles may comprise in addition to the spunbonded nonwoven fabric a melt blown web.

**Patentansprüche**

1. Spinnvliesstoff, bestehend aus einem Polypropylen-Homopolymer mit

   a) 0,0 bis unter 0,8 Gew.-% eines $C_2$ oder $C_4$ bis $C_{10}$)-Alpha-Olefin-Comonomers
   b) einer Schmelzflussrate (MFR, 230°C, 2,16 kg, ISO 1133) von 15 bis 120 g/10 min und
   c) einer Molekulargewichtsverteilung (Mw/Mn) > 4,3 (gemessen durch Größenausschlusschromatographie gemäß ISO 16014)
   d) einer Schmelztemperatur (DSC, ISO 11357-1 & -2) im Bereich von 155°C bis 162°C und
   e) frei ist von Phthalsäureestern sowie deren jeweiligen Abbauprodukten und wobei das Polypropylen-Homopolymer visgebrochen wurde, wodurch das Verhältnis des MFR nach dem Visbreaking [MFR Ende] zum MFR vor dem Visbreaking [MFR Anfang]
   [MFR Ende] / [MFR Anfang] > 5 ist,
   wobei das Polypropylen-Homopolymer in Gegenwart von a) einem Ziegler-Natta-Katalysator (ZN-C), umfassend Verbindungen (TC) eines Übergangsmetalls der Gruppe 4 bis 6 der IUPAC, eine Metallverbindung der Gruppe 2 (MC) und einen internen Donor (ID), wobei der interne Donor (ID) eine Nicht-Phthal-Verbindung und ein Citraconat ist, b) gegebenenfalls einem Co-Katalysator (Co) und c) gegebenenfalls einem externen Donor (ED) polymerisiert wurde.

2. Spinnvliesstoff gemäß Anspruch 1, wobei der Stoff durch ein Verhältnis zwischen Zugfestigkeit (TS) und Bruchdehnung (EB) gekennzeichnet ist
   EB(CD) > 64 + 1,1*TS(CD) 0,011 *TS(CD)$^2$,
   wobei beide Parameter in Querrichtung (CD) an Spinnvliesstoffen mit einem spezifischen Flächengewicht von 5 bis 50 g/m$^2$ gemäß EN 29073-3 (1989) bestimmt werden.

3. Spinnvliesstoff gemäß Anspruch 1 oder Anspruch 2, wobei das Polypropylen-Homopolymer einen in Xylol kalt löslichen Gehalt (XCS) im Bereich von 2,5 bis 5,5 Gew.-% aufweist.

4. Spinnvliesstoff gemäß Anspruch 1, wobei das molare Verhältnis von Co-Katalysator (Co) zu externem Donor (ED) [Co/ED] 5 bis 45 beträgt.

5. Spinnvliesstoff gemäß Anspruch 1 oder 4, wobei der Ziegler-Natta-Katalysator (ZN-C) durch ein Verfahren hergestellt wird, das die folgenden Schritte umfasst

   a)

      a1) Bereitstellen einer Lösung von mindestens einer Gruppe-2-Metallalkoxyverbindung (Ax), die das Reaktionsprodukt einer Gruppe-2-Metallverbindung (MC) und eines einwertigen Alkohols (A) ist, der zusätzlich zum Hydroxylteil mindestens einen Etherteil enthält, gegebenenfalls in einem organischen flüssigen Reaktionsmedium; oder
      a2) eine Lösung von mindestens einer Gruppe-2-Metallalkoxyverbindung (Ax'), die das Reaktionsprodukt einer Gruppe-2-Metallverbindung (MC) und einer Alkoholmischung des einwertigen Alkohols (A) und eines einwertigen Alkohols (B) der Formel ROH ist, gegebenenfalls in einem organischen flüssigen Reaktionsmedium; oder
      a3) Bereitstellen einer Lösung einer Mischung aus der Gruppe-2-Alkoxyverbindung (Ax) und einer Gruppe-2-Metallalkoxyverbindung (Bx), die das Reaktionsprodukt einer Gruppe-2-Metallverbindung (MC) und des einwertigen Alkohols (B) ist, gegebenenfalls in einem organischen flüssigen Reaktionsmedium; oder
      a4) Bereitstellen einer Lösung eines Gruppe-2-Alkoxids der Formel M(OR1)n(OR2)mX2-n-m oder einer Mischung der Gruppe-2-Alkoxide M(OR1)n'X2-n' und M(OR2)m'X2-m', wobei M ein Gruppe-2-Metall ist, X ein Halogen ist, R1 und R2 verschiedene Alkylgruppen mit $C_2$ bis $C_{16}$-Kohlenstoffatomen sind und 0 < n < 2, 0 < m < 2 und n+m+(2-n-m) = 2, vorausgesetzt, dass sowohl n als auch m ≠ 0, 0 < n' < 2 und 0 < m' < 2 sind; und

b) Zugabe der Lösung aus Schritt a) zu mindestens einer Verbindung (TC) eines Übergangsmetalls der Gruppe 4 bis 6 und
c) Gewinnung der festen Katalysatorteilchen,

und die Zugabe des internen Donors (ID) in einem beliebigen Schritt vor Schritt c).

6. Spinnvliesstoff gemäß einem der vorhergehenden Ansprüche, wobei das Visbreaking entweder mit einem Peroxid oder einer Mischung von Peroxiden oder mit einem Hydroxylaminester oder einer Mercaptanverbindung als Quelle für freie Radikale (Visbreaking-Mittel) oder durch rein thermischen Abbau erfolgt.

7. Spinnvliesstoff gemäß Anspruch 6, wobei das Visbreaking mit einem Peroxid oder einem Gemisch von Peroxiden durchgeführt wird.

8. Spinnvliesstoff gemäß einem der vorhergehenden Ansprüche, wobei das Polypropylen-Homopolymer zusätzliche Mengen an Additiven enthält, die aus der Gruppe ausgewählt sind, umfassend Antioxidantien, Stabilisatoren, Füllstoffe, Farbstoffe, Nukleierungsmittel und Antistatika, wobei das Polypropylen-Homopolymer mindestens 95,0 Gew.-% ausmacht.

9. Verfahren zur Herstellung eines Spinnvlieses nach einem der vorhergehenden Ansprüche, wobei das Polypropylen-Homopolymer unter Verwendung einer Faserspinnanlage bei einem maximalen Kabinenluftdruck von mindestens 3000 Pa bis zu 10000 Pa spinngebunden wird.

10. Verwendung eines Spinnvlieses nach einem der vorhergehenden Ansprüche 1 bis 8 zur Herstellung von Gegenständen.

11. Artikel, der den Spinnvliesstoff nach einem der vorhergehenden Ansprüche 1 bis 8 umfasst, wobei der Artikel ausgewählt ist aus Filtrationsmedium (Filter), Windel, Damenbinde, Slipeinlage, Inkontinenzprodukt für Erwachsene, Schutzkleidung, OP-Abdeckung, OP-Kittel und OP-Kleidung.

12. Gegenstände gemäß Anspruch 11, wobei die Gegenstände zusätzlich zu dem Spinnvlies ein schmelzgeblasenes Vlies umfassen können.

## Revendications

1. Etoffe non tissée filée-liée comprenant un homopolymère de polypropylène ayant

a) 0,0 à moins de 0,8 % en poids d'un comonomère d'alpha-oléfine en $C_2$ ou en $C_4$ à $C_{10}$
b) un indice de fluage (MFR, 230°C, 2,16 kg, ISO 1133) de 15 à 120 g/10 min et
c) une distribution des masses moléculaires (Mw/Mn) > 4,3 (mesurée par chromatographie d'exclusion diffusion conformément à la norme ISO 16014)
d) un point de fusion (DSC, ISO 11357-1 & -2) dans la plage de 155°C à 162°C et
e) qui est exempt d'esters d'acide phtalique ainsi que de leurs produits de décomposition respectifs

et dans laquelle l'homopolymère de propylène a été viscoréduit, moyennant quoi le rapport du MFR après viscoréduction [MFR final] sur le MFR avant viscoréduction [MFR initial], [MFR final]/[MFR initial], est > 5, moyennant quoi l'homopolymère de polypropylène a été polymérisé en présence de a) un catalyseur de Ziegler-Natta (ZN-C) comprenant des composés (TC) d'un métal de transition des Groupes 4 à 6 de l'IUPAC, un composé d'un métal du Groupe 2 (MC) et un donneur interne (ID), dans laquelle ledit donneur interne (ID) est un composé non phtalique et est un citraconate ; b) optionnellement un co-catalyseur (Co), et c) optionnellement un donneur externe (ED).

2. Etoffe non tissée filée-liée selon la revendication 1, dans laquelle l'étoffe est **caractérisée par** une relation entre la résistance en traction (TS) et l'allongement à la rupture (EB)

EB (CD) > 64 + 1,1*TS(CD) 0,011*TS(CD)$^2$,

les deux paramètres étant déterminés dans la direction transversale (CD) sur des étoffes non tissées filées-liées ayant une masse surfacique spécifique de 5 à 50 g/m$^2$ conformément à la norme EN 29073-3 (1989).

3. Etoffe non tissée filée-liée selon la revendication 1 ou la revendication 2, dans laquelle l'homopolymère de polypropylène a une teneur soluble à froid dans le xylène (XCS) dans la plage de 2,5 à 5,5 % en poids.

4. Etoffe non tissée filée-liée selon la revendication 1, dans laquelle le rapport molaire du co-catalyseur (Co) sur le donneur externe (ED) [Co/ED] est de 5 à 45.

5. Etoffe non tissée filée-liée selon la revendication 1 ou 4, dans laquelle le catalyseur de Ziegler-Natta (ZN-C) est produit par un procédé comprenant les étapes de

a)

a1) obtention d'une solution d'au moins un composé alcoxy d'un métal du Groupe 2 (Ax) qui est le produit de la réaction d'un composé d'un métal du Groupe 2 (MC) et d'un alcool monovalent (A) comprenant, en plus du fragment hydroxyle, au moins un fragment éther optionnellement dans un milieu réactionnel liquide organique ; ou

a2) d'une solution d'au moins un composé alcoxy d'un métal du Groupe 2 (Ax') qui est le produit de la réaction d'un composé d'un métal du Groupe 2 (MC) et d'un mélange d'alcools de l'alcool monovalent (A) et d'un alcool monovalent (B) de formule ROH, optionnellement dans un milieu réactionnel liquide organique ; ou

a3) obtention d'une solution d'un mélange du composé alcoxy du Groupe 2 (Ax) et d'un composé alcoxy d'un métal du Groupe 2 (Bx) qui est le produit de la réaction d'un composé d'un métal du Groupe 2 (MC) et de l'alcool monovalent (B), optionnellement dans un milieu réactionnel liquide organique ; ou

a4) obtention d'une solution d'alkylate du Groupe 2 de formule M(OR1)n(OR2)mX2-n-m ou d'un mélange d'alkylates du Groupe 2 M(OR1)n'X2-n' et M(OR2)m'-X2-m', où M est un métal du Groupe 2, X est un halogène, R1 et R2 sont des groupes alkyle différents ayant 2 à 16 atomes de carbone, et 0 < n < 2, 0 < m < 2 et n+m+(2-n-m) = 2, sous réserve que tant n que m ≠ 0, 0 < n' < 2 et 0 < m' < 2 ; et

b) addition de ladite solution obtenue dans l'étape a) à au moins un composé (TC) d'un métal de transition des Groupes 4 à 6 et

c) obtention des particules de composant de catalyseur solide,

et addition du donneur interne (ID) à n'importe quelle étape avant l'étape c).

6. Etoffe non tissée filée-liée selon l'une quelconque des revendications précédentes, dans laquelle la viscoréduction est effectuée soit avec un peroxyde ou un mélange de peroxydes soit avec un ester d'hydroxylamine ou un composé mercaptan en tant que source de radicaux libres (agent de viscoréduction) soit par dégradation purement thermique.

7. Etoffe non tissée filée-liée selon la revendication 6, dans laquelle la viscoréduction est effectuée avec un peroxyde ou un mélange de peroxydes.

8. Etoffe non tissée filée-liée selon l'une quelconque des revendications précédentes, dans laquelle l'homopolymère de polypropylène comprend de plus des quantités d'additifs choisis dans le groupe comprenant les antioxydants, les stabilisants, les charges, les colorants, les agents de nucléation et les agents antistatiques, l'homopolymère de polypropylène représentant au moins jusqu'à 95,0 % en poids.

9. Procédé pour préparer une étoffe filée-liée selon l'une quelconque des revendications précédentes, dans lequel l'homopolymère de polypropylène est filé-lié par utilisation d'une ligne de filage de fibres sous une pression d'air de cabine maximale d'au moins 3 000 Pa jusqu'à 10 000 Pa.

10. Utilisation d'une étoffe non tissée filée-liée selon l'une quelconque des revendications 1 à 8 pour la préparation d'articles.

11. Article comprenant l'étoffe non tissée filée-liée selon l'une quelconque des revendications 1 à 8, dans lequel ledit article est choisi parmi un milieu de filtration (filtre), une couche, une serviette hygiénique, un protège-slip, un article d'incontinence pour adultes, un vêtement protecteur, un champ chirurgical, une blouse chirurgicale, et un vêtement chirurgical.

12. Articles selon la revendication 11, dans lesquels les articles peuvent comprendre, en plus de l'étoffe non tissée filée-liée, une toile obtenue par fusion-soufflage.

**Figures:**

**Figure 1: Elongation at break (CD) and max. tensile strength (CD) of IE1 to IE5 compared to CE1 to CE5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2479331 A
- EP 2682505 A
- EP 2631269 A
- EP 0887379 A
- WO 9212182 A
- WO 2004000899 A
- WO 2004111095 A
- WO 9924478 A
- WO 9924479 A
- WO 0068315 A
- WO 2012007430 A
- EP 2610271 A
- EP 261027 A
- EP 2610272 A

**Non-patent literature cited in the description**

- *CHEMICAL ABSTRACTS,* 88-99-3
- *CHEMICAL ABSTRACTS,* 1592-23-0
- *CHEMICAL ABSTRACTS,* 6683-19-8
- *CHEMICAL ABSTRACTS,* 78-63-7